# EUROPEAN PATENT SPECIFICATION

(11) **EP 0 883 421 B1**
(45) Date of publication and mention of the grant of the patent: **17.07.2002**
(21) Application number: 96942081.9
(22) Date of filing: 27.11.1996
(51) Int. Cl.: B60N 2/00, A62B 35/00, B60R 22/34

(54) **Modular seat assembly**
Modulare Sitzeinrichtung
Ensemble siège modulaire

(30) Priority: 27.11.1995 US 7548 P; 07.05.1996 US 16775 P; 29.08.1996 US 705420; 29.08.1996 US 705422; 29.08.1996 US 705424; 29.08.1996 US 705512; 29.08.1996 US 705513
(43) Date of publication of application: 16.12.1998
(73) Proprietor: Lear Corporation, Southfield, MI 48034 (US)
(72) Inventor: MASTERS, James, Farmington Hills, MI 48334 (US); BATESON, Daniel, Farmington, MI 48220 (US); BRODSKY, Steve, New Boston, MI 48164 (US); DAVIDSON, Russell, Dearborn, MI 48127 (US); FU, David, Rochester Hills, MI 48306 (US); HEYER, Michael, Farmington Hills, MI 48334 (US); LEISTRA, Philip, Novi, MI 48377 (US); MASSARA, Andrew, Southfield, MI 48075 (US); MUSUKULA, Vijay, Southfield, MI 48304 (US); PARTINGTON, Eric, Troy, MI 48098 (US); RYBAK, Steve, Southfield, MI 48034 (US); SLAVEN, John, Harper Woods, MI 48225 (US); AREFI, Majid, Troy, MI 48083 (US)
(74) Representative: Archer, Philip Bruce
(86) International application number: US9618985
(87) International publication number: WO9719727

(56) References cited:
- WO-A-96/38318
- US-A- 5 022 677
- US-A- 5 439 271

## Description

### TECHNICAL FIELD

The subject invention relates to automotive seat assemblies and, more specifically, to a modular seat frame.

### BACKGROUND OF THE INVENTION

By way of background, vehicle front and rear seat assemblies typically include a right and left seat assembly having a seat bottom portion, a pivotal seat back, a seat track assembly and a center console or armrest assembly positioned between the right and left seat assemblies. Typically, each of the components comprising the seat assemblies must be independently mounted in the vehicle, that is, to the vehicle floor pan. The seat bottom and seat back are typically mounted to a pair of seat tracks which must be then mounted to the vehicle floor pan for each individual seat assembly. Similarly, the center console is commonly secured between the seat assemblies and mounted to the vehicle floor pan.

Additionally, the front seat assemblies for automobiles are typically designed for each model of an automobile and are only usable in that model. The seat assembly for each model is fabricated from components specifically designed for that particular seat assembly and the seat assembly for opposite sides of the vehicle frequently differ, sometimes requiring the two seats to be installed in the vehicle in separate procedures.

There remains a need for an improved design which is fabricated of a minimum of components which are universally used in seats from model to model, yet retaining the flexibility to individually stylize the seats from model to model. Attendant to those design objectives is the requirement for a basic or universal seat frame and seat back assembly.

It is also desirable to improve both the comfort and performance of seatbelt restraint systems by developing seat assemblies which have the seat belt restraint systems mounted to the seat rather than the vehicle body. This improves comfort and performance of the restraint system by maintaining the seat belt anchor points in fixed positions relative to the seat occupant, regardless of the adjusted position of the seat within the vehicle body.

Rear seat assemblies typically include a seat bottom and a seat back. The seat back comprises a right and a left seating surface and a center portion positioned between the right and left seating surfaces. The right and left seating surfaces and the center portion of the seat back are usually one unitary piece, i.e., they form a bench-type seat back. The right and left seating surfaces are conformed into numerous shapes, sizes, or configurations depending upon the vehicle model. An armrest may be pivotally disposed within the center portion for selective use by an occupant. Further, stationary or adjustable headrests may be located at the top surface of the seat back. A number of mounting brackets extend downwardly from the seat back for mounting engagement with a vehicle floor pan. These brackets may comprise a pivot hinge which allows the seat back to pivot forwardly toward the seat bottom. This may be desirable if a user wishes to extend the floor of a rear trunk compartment.

Similarly, the seat bottom comprises a right and left seating surface and a center portion positioned between the right and left seating surfaces. The right and left seating surfaces and the center portion of the seat bottom are also one unitary piece. The right and left seating surfaces may also be contoured into any number of shapes, sizes, or configurations. A number of mounting brackets extend from the seat bottom portion for mounting engagement with the seat back and/or the vehicle floor pan.

US 5,439,27 (corresponding to the preamble of claim 1) describes an example of a front vehicle seat assembly and the attendant problems of designing a basic or universal seat.

US 5,022,677 describes a front vehicle seat arrangement which also incorporates integral seat belts attached to the seat.

WO 96/38318 describes an automotive bench seat assembly and frame structive which is fixed in position relative to the vehicle.

### SUMMARY OF THE INVENTION AND ADVANTAGES

According to the present invention there is provided a seat frame assembly as claimed in independent claim 1. Further features of the invention are disclosed in the accompanying dependent claims.

In an embodiment there is described a seat frame assembly for a vehicle comprising a pair of fixed rails extending fore and aft and being laterally spaced from one another, with brackets attached to the fixed rails for attachment to a vehicle body, a slide rail supported by each of the fixed rails provides fore and aft movement relative to the fixed rails. A pair of front and rear crossbeams interconnect the slide rails for supporting all of the remaining components of a seat supported totally on the crossbeams.

The embodiment also discloses an automotive seat back assembly comprising a pair of spaced upright members each having lower ends and upper ends and a cross-member extending between the upper ends with mounting means at the lower ends for mounting to a seat frame. A shoulder belt housing extends upwardly between the upright members from below the cross-member to a distal end disposed above the cross-member.

The embodiment also discloses a seat assembly comprising a seat frame and a seat back including a pair of spaced upright members each having lower ends and upper ends with mounting means at the lower ends for mounting the seat back to the seat frame for pivotal movement relative to the seat frame.

### BRIEF DESCRIPTION OF THE DRAWINGS

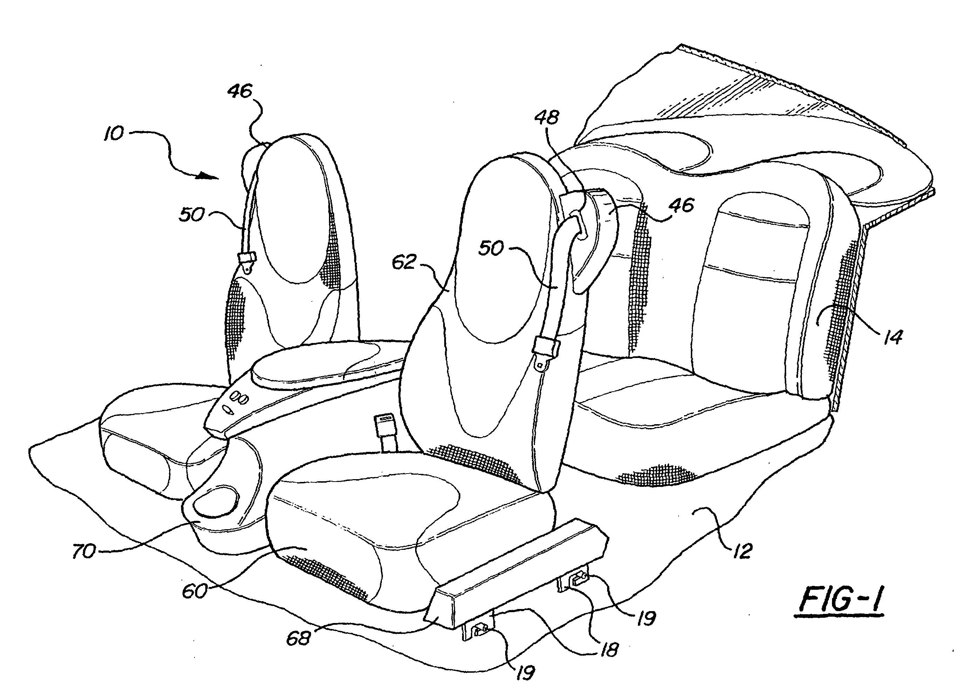

Figure 1 is a perspective view of the interior of an automobile showing a rear seat assembly in combination with the front seat assembly of the subject invention;

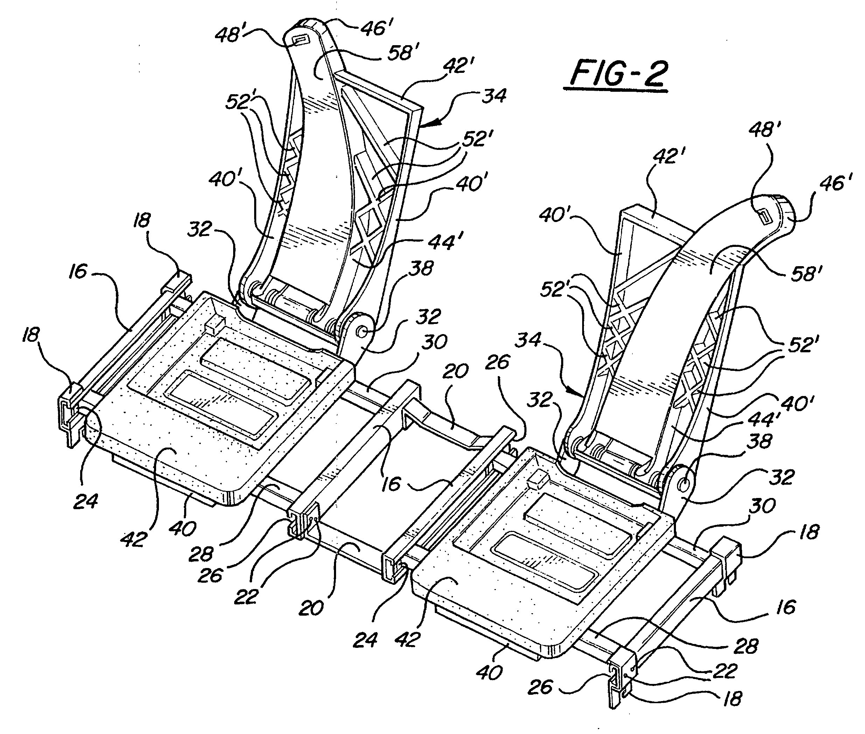

Figure 2 is a perspective view of the support components of the front seat assembly employing the subject invention;

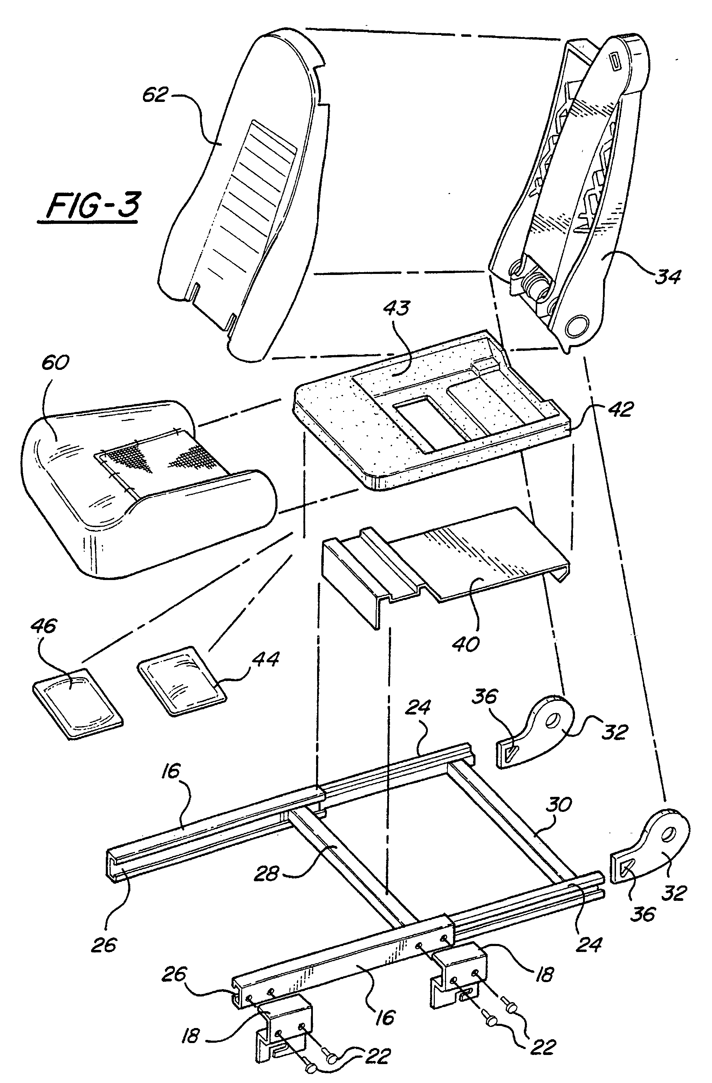

Figure 3 is an exploded perspective view of one occupant seat of the front seat assembly of the subject invention;
Figure 4 is a fragmentary side view of the seat assembly of the subject invention;

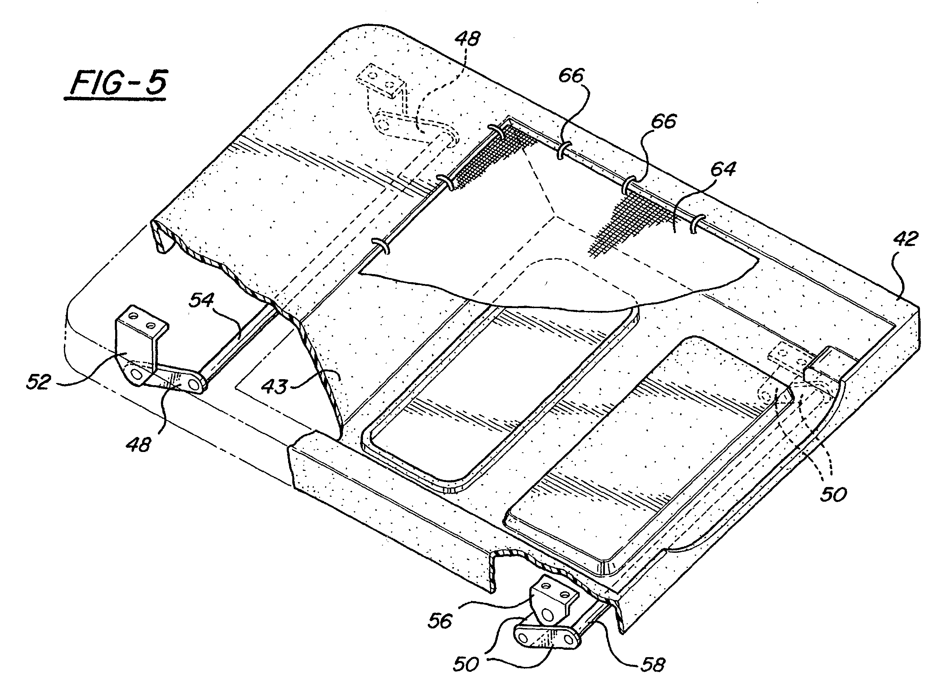

Figure 5 is a perspective view, partially broken away and in cross-section, of the occupant supporting component of the subject seat assembly;
Figure 6 is an exploded perspective view of the seat back;
Figure 7 is a perspective view of the cover of the shoulder belt housing and shoulder belt employed in the seat back;

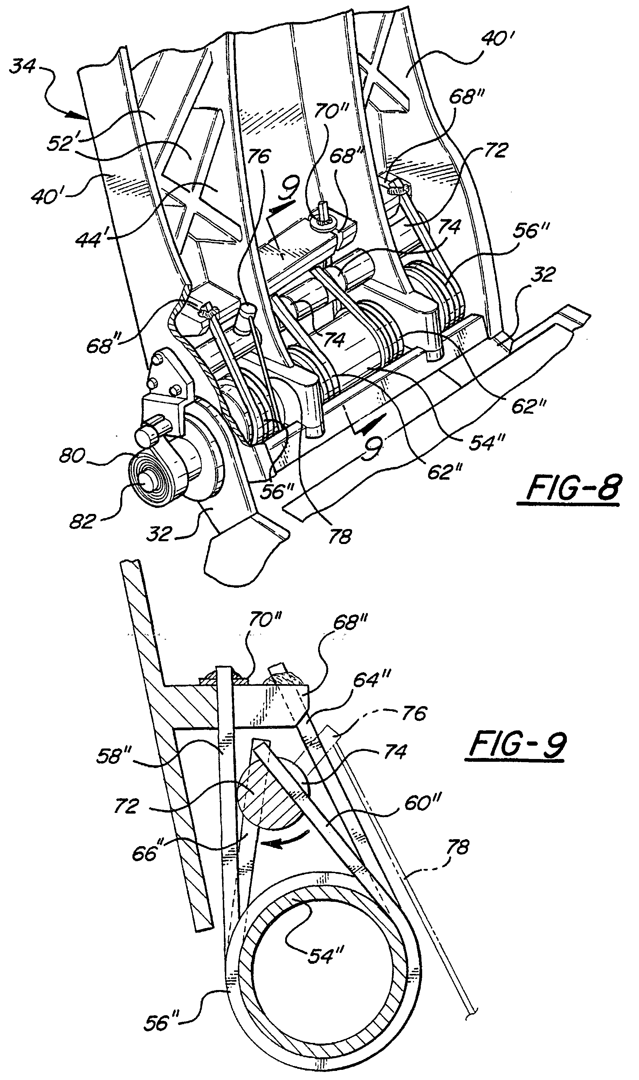

Figure 8 is a fragmentary perspective view of the recliner mechanism;
Figure 9 is a fragmentary cross-sectional view taken along line 9-9 of Figure 8;
Figure 10 is a perspective view of an automotive seat assembly and a vehicle floor pan utilizing a self-aligning and self-docking electrical connector;

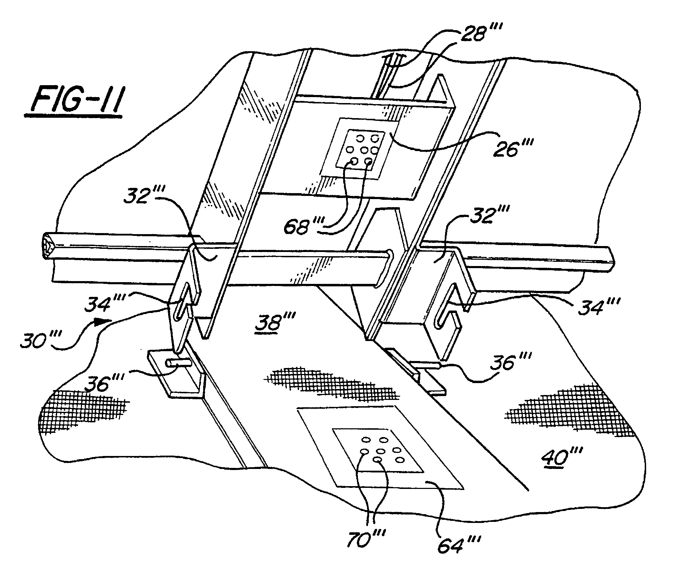

Figure 11 is a fragmentary perspective view of the seat assembly and the floor pan.

### DETAILED DESCRIPTION OF THE PREFERRED EMBODIMENT

Referring to the figures, wherein like numerals indicate like or corresponding parts throughout the several views, a front seat assembly is generally shown at 10. The assembly 10 is to be installed as a unit in a vehicle 12 in front of a rear seat assembly 14.

The seat assembly 10 includes a pair of fixed rails 16 extending fore and aft and being laterally spaced across the vehicle 12 from one another. A plurality of brackets 18 and 20 are attached by rivets 22, or the equivalent, to the fixed rails 16 for attachment to a vehicle body 12. Preferably, the brackets 18 include an L-shaped slot which latch onto hooks 19 which extend from the vehicle 12. A slide rail 24 is supported by each of the fixed rails 16 for fore and aft movement relative to the fixed rails 16. One of the fixed 16 and slide 24 rails being C-shaped channels with the other of the fixed 16 and slide 24 rails being slidably disposed in the C-shaped channel. More specifically, the fixed rails 16 comprise the C-shaped channels having openings 26 which face one another and the slide rails 24 are slidably disposed in the C-shaped channels defining the fixed rails 16. Although not shown, roller or ball bearings may support the slide rails 24 in the fixed rails 16. A pair of front 28 and rear 30 cross-beams interconnect the slide rails 24 for supporting all the remaining components of a first seat supported totally on the cross-beams 28 and 30. The cross-beams 28 and 30 extend through the openings 26 in the C-shaped channels defining the fixed rails 16 with the ends thereof attached to the slide rails 24, which are disposed inside the C-shaped channels.

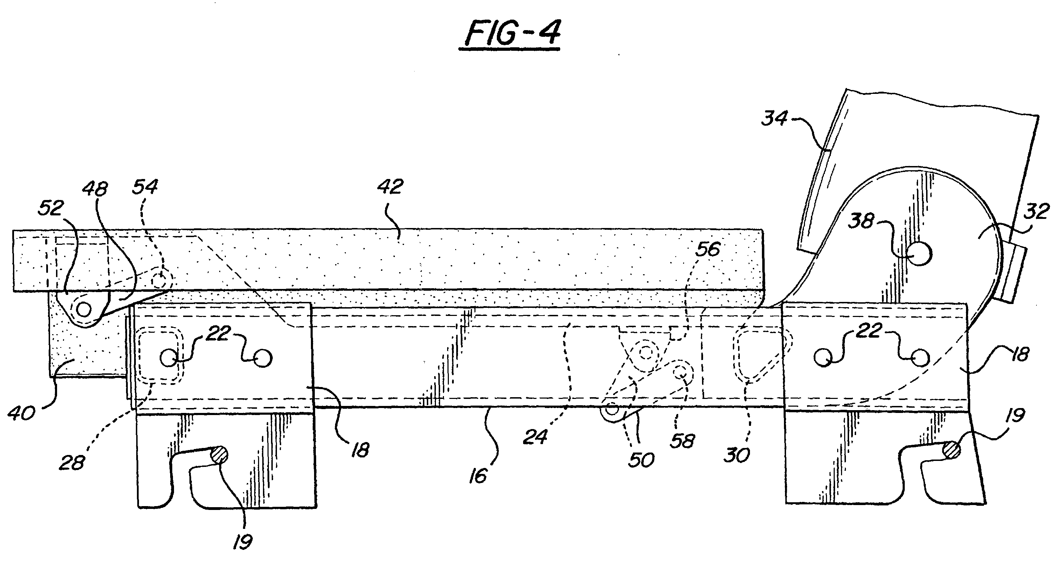

A pair of seat back flanges 32 support a seat back 34. The rear cross beam 30 has an irregular cross section, i.e., triangular, as best in shown in phantom lines in Figure 4. The cross-beams 28 and 30 are hollow tubes and provide torsional strength, particularly for the seat back flanges 32. Each of the seat back flanges 32 has an irregular or triangular opening 36 complimentary to and surrounding the rear cross beam 30 for supporting the seat back 34 on the rear cross beam 30. Appropriate pivot pins 38 interconnect the seat back 34 and the flanges 32 for reclining movement of the seat back 34.

A support sheet 40 extends between and is supported by the cross-beams 28 and 30. The support sheet 40 may be attached to the cross-beams 28 and 30 by fasteners or spot welding, or the equivalent. The support sheet 40 is cupped at the rear to extend around the rear cross beam 30 and has a platform at the front edge.

A seat pan 42 is disposed above the support sheet 40 for supporting an occupant over the recess 43. A rear bladder 44 and a front bladder 46 are disposed between the sheet 40 and the pan 42 for raising and lowering the respective back and front of the pan 42 relative to the sheet 40 for adjusting the vertical positioning of the seat. As will be appreciated, an appropriate pump and electrical drive motor with associated controls will be included in the seat assembly to inflate and deflate the respective bladders 44 and 46.

A pair of front linkages 48 interconnect the pan 42 and the slide rails 24 for guiding the raising and lowering movement of the front of the pan 42. Two sets of rear linkages 50 interconnect the pan 42 and the slide rails 24 for guiding, raising and lowering movement of the rear of the pan 42. More specifically, a pair of front linkages 48 are rotatably connected to brackets 52 which are, in turn, secured to the pan 42 and are interconnected by a rod 54. The rod 54 is non-rotatably supported to linkages 48 so that the linkages 48 rotate in unison and to keep both sides of the seat at the same vertical height. The rod 54 is rotatably supported by and above the slide rails 24. In similar fashion, one of the rear links of each pair 50 is connected to the pan 42 by bracket 56 with the other link of each pair 50 secured to a rod 58, which is, in turn, rotatably supported by and between the slide rails 24 whereby the rear of the seat moves up and down in unison from side to side.

The front seat assembly 10 includes second pairs of fixed 16 and slide 24 rails and interconnecting cross-beams 28 and 30 defining a second seat. The brackets therefor include frame members 20 interconnecting the inside fixed rails 16 of the first and second seat assemblies for defining a front seat assembly 10 which may be installed into a vehicle 12 as one unit. In other words, a robot could move the entire finished seat assembly 10 through the door opening in the vehicle 12 body and precisely connect the brackets 18 to the hooks 19 and the frame members 20 to similar connecting devices.

In accordance with the component philosophy, a stylized seat bottom trim 60 is supported on the pan 42. In a similar fashion, a stylized back trim 62 is supported on the seat back frame 34. The trim components 60 and 62 are secured in place by appropriate quick fasteners (not shown), e.g., screws. Different trim components 60 and 62 may be utilized for different color vehicles and for different models of vehicles.

An occupant support means 64 is disposed in the recess 43 of the pan 42 for cushioning support of an occupant. More specifically, the occupant support means 64 comprises a flexible woven sheet suspended across the recess by rings 66 and provides a soft support for the occupant.

The outermost cooperating pairs of the fixed 16 and slide 24 rails are disposed laterally of or beside the bottom trim 60 and a cover 68 is disposed over the laterally disposed pair of fixed 16 and slide 24 rails. A center console 70 is supported on the frame members 20 between the first and second seat assemblies.

The automotive seat back 34 which comprises a pair of spaced upright members 40' each having lower ends rotatably supported on the pivot pins 38. In other words, the pivot pins 38 define mounting means at the lower end of the upright members 40' for mounting the seat back 34 to the flanges 32 of the seat frame. The upright members 40' have upper ends interconnected by a cross-member 42' extending between the upper ends.

A shoulder belt housing 44' extends upwardly between the upright members 40' from below the cross-member 42' to a distal end 46' disposed above the cross-member 42'. The shoulder belt housing 44' defines a belt opening 48' for guiding a shoulder belt 50'. The opening 48' is disposed vertically above one of the upright members 40' for positioning the shoulder belt 50' over the shoulder of the occupant. As shown, the belt opening 48' is positioned outside the area between the upright members 40'.

The seat back 34 includes criss-crossing truss elements 52' interconnecting the upright members 40' and the housing 44'. The truss elements 52' suspend the housing 44' within the periphery of the seat back as defined by the upright members 40' and the cross-member 42'. Preferably, the upright members 40' and the cross-member 42' and the truss elements 52' and the housing 44' are all integrally formed of a homogenous material, such as being die cast of magnesium.

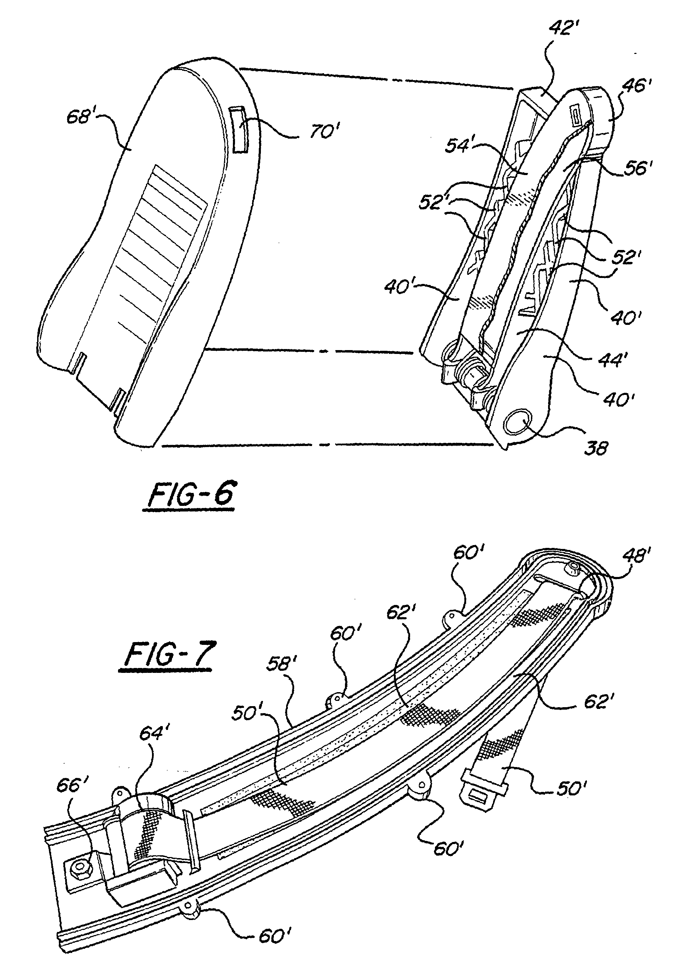

The housing 44' includes a lower end disposed midway between the upright members 40' and curves upwardly and outwardly to the distal end 46' on one side of the seat back 34. As seen in Figures 6 and 7, the housing 44' includes a coffin portion defined by side walls 54' and a bottom 56' with the side walls 54' being integral with the truss members 52' and the upper member 42'. The housing 44' further comprises a cover 58' disposed over and in sealing engagement with the side walls 54'. As shown, the cover 58' is disposed on the front face of the seat back 34 but the positions of the cover 58' and the bottom 56' may be reversed so that the cover 58' faces the rear seat assembly 14. The cover 58' includes lateral pads 60' for receiving screws which threadedly engage holes in the truss members 52' or bosses to secure the cover over the side walls 54' of the coffin portion. The cover 58' is rotated 180° from the position shown in Figure 7 to the position shown in Figure 6.

The cover 58' of the housing 44' includes a guideway 62' for the shoulder belt 50'. The opening 48' is elongated along an axis disposed at an acute angle to the upper cross-member 42' for accommodating the diagonal extension of a shoulder belt 50' over the shoulder of the occupant. To accommodate the angled exit of the seat belt 50' from the opening 48', the guideway 62' has a compound curve to prevent the edges of the shoulder belt 50' from gathering in the extension thereof in the lower guideway 62' and through the curved guideway 62' to the opening 48'. In other words, the compound curve is analogous to a banked or ramped race track.

The upright members 40', the upper member 42', the truss members 52', and the side walls 54' are all rectangular in cross-section with the major axes thereof extending from front to back of the seat back 34, i.e., they are plate-like with their edges facing the front and rear of the seat back 34. The major axis of the rectangular cross-section of the truss members 52' is less than the major axis of the rectangular cross-section of the upright members 40', i.e., the truss members 52' are recessed below the outward edges of the upright members 40'.

The shoulder belt 50' disposed in the housing includes a reel 64' for recoiling and uncoiling the shoulder belt 50'. The reel 64' is attached to the cover 58' by bracket and bolt assembly 66'.

A trim component 68' is disposed over the seat back 34, the component 68' having an opening 70' therein and the distal end 46' of the housing 44' extends through the opening 70'. The component 68' encompasses the entire seat back 34 but may cover only the front of the seat back 34. As illustrated, there are right and left hand seat backs 34, but to reduce components the seat backs may be identical with the distal ends 46' being on the same side in both of the front seats.

The seat back flanges 32 mount the seat back 34 to the seat frame for pivotal movement relative to the seat frame and a control mechanism is included for controlling the pivotal movement of the seat back 34. The control mechanism includes a cylinder 54" and a first coil spring 56" wound around and in gripping engagement with the cylinder 54". The cylinder 54" is non-rotatably secured to the seat frame by being welded or otherwise secured to the flanges 32. The first coil spring 56" has first 58" and second 60" ends extending tangentially from the cylinder 54". A second coil spring 62" is wound around and in gripping engagement with the cylinder 54" and, likewise, has third 64" and fourth 66" ends extending tangentially from the cylinder 54". Each of the coils 56" and 62" is rectangular in cross-section with one of the sides or edges thereof being in the gripping frictional engagement with the cylinder 54".

The seat back 34 defines or presents slots 68" and the first 58" and third 64" ends are retained in the slots 68". More specifically, washers 70" are welded to the first ends 58" to prevent the first ends 58" from being pulled through the associated slot 68". Because the third ends 64" of the other coils are disposed at an angle in the slots 68", they are welded directly to the sides of the slots 68". Alternatively, straps or loops could extend across the slots 68" with washers likewise welded to the third ends 64" and retained in the slots 68" thereby. Therefore, the first 58" and third 64" ends are secured to the seat back 34.

As one skilled in the art can appreciate, the second 60" and fourth 66" ends could be retained in slots 68" with the first 58" and third 64" ends continuously to extend tangentially from the cylinder 54". In addition, the first 58", second 60", third 64", and fourth 66" do not necessarily have to extend tangentially in the same direction, i.e., they may be transverse to one another. To that end, the first 58" and third 64" ends of the first 56" and second 62" coil springs could be retained in slots 68" located in the rear cross-beams 30. Hence the first 58" and second 68" ends of the coil spring project in opposite directions.

If one of the ends 58", 60", 64", 66" of the coil springs 66", 62" is secured to a structure other than the seat back 34 the cylinder 54" maybe rotatably secured to the seat back 34 wherein the seat back 34 and cylinder 54" rotate as one unit.

An actuator is included for moving the second end 60" relative to the first end 58" for unwinding the first coil spring 56" in a clockwise direction from the gripping engagement with the cylinder 54" to allow the pivotal movement of the seat back 34 relative to the seat frame and for moving the fourth end 66" relative to the third end 64" for unwinding the second coil spring 62" in a counter-clockwise direction from the gripping engagement with the cylinder 54" to allow the pivotal movement of the seat back relative to the seat frame. As will be appreciated, the clockwise movement and counter-clockwise movement depend upon which side is viewed and are terms of relative definition and not limiting as one may be substituted for the other.

The actuator includes a camshaft 72 in parallel relationship to the cylinder 54" and engaging the second 60" and fourth 66" ends, the camshaft 72 being rotatably supported by the upright members 40' of the seat back 34 for rotary movement between a set position with the coils 56" and 62" in gripping engagement with the cylinder 54" to prevent the pivotal movement of the seat back relative to the seat frame and a release position in which the second 60" and fourth 66" ends have been moved in an unwinding direction to unwind the coils 56" and 62" from the gripping engagement to allow the pivotal movement of the seat back 34 relative to the seat frame. The camshaft 72 includes cam lobes in the form of grooves 74 for moving the second 60" and fourth 66" ends between the set and release positions. An arm 76 extends radially from the camshaft 72 and a manually actuateable release cord 78 is connected to the arm 76 for rotating the camshaft 72.

A biasing spring 80 reacts between the seat back 34 and a shaft 82 fixed to the flanges 32 for urging the seat back 34 to pivot relative to the seat frame when the coils 56" and 62" are in the release position.

As stated above, the first 56" and second 62" coil springs are in constant engagement with the cylinder 54" when the seat back 34 is in a rest position. During excessive acceleration or deceleration, i.e., a rear end collision or a frontal collision, the coil springs 56", 62" will automatically grip the cylinder 54" and reduce the frontal or rearward movement of the seat back 34. Specifically, in a rear end collision the seat back 34 will have a tendency to move backward which will pull the third end 64" of the second coil spring 62" backward, thereby progressively gripping the cylinder 54". In other words, as the tendency for the seat back 34 to move rearward increases the gripping force applied to the cylinder 54" increases. Conversely, in a frontal collision the seat back 34 will have a tendency to move forward which will pull the first end 58" of the coil spring 56" forward and progressively grip the cylinder 54". Accordingly, the subject invention also provides an added safety feature to the seat back 34.

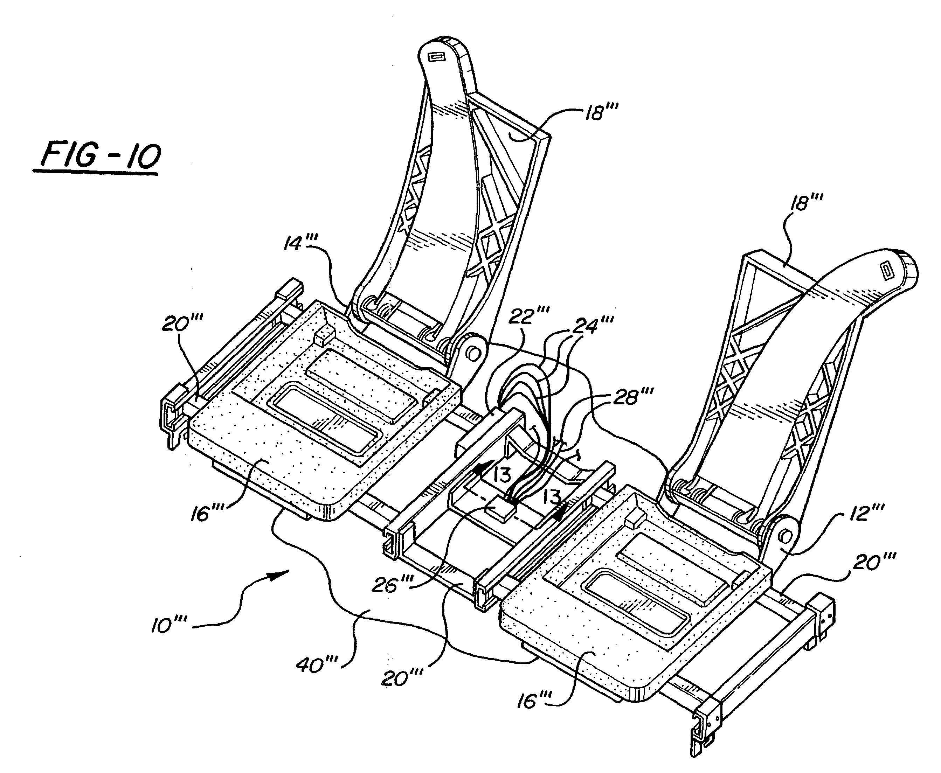

Referring to Figure 10, at least one electrically operated component 22"' is supported by the seat frame 20"'. The electrically operated component 22'" is a seat track adjustment mechanism. Other electrically operated components commonly found within the seat assemblies may include seat adjustment mechanisms, lumbar support mechanisms, headrest adjustment mechanisms, a seat bottom heating mechanism, or other similar devices. There may also be electrically operated components found within the center console assembly, which can include armrest adjustment mechanisms, cigarette lighters, various indicating lights, map lights, cellular phones, stereo components, or other similar devices. Each of these electrically operated components 22"' has numerous input wires 24''' extending therefrom. Any number or all of these electrically operated components 22''' could be supported by the frame member 20''' without deviating from the scope of the subject invention.

A first electrical connector box 26"' is secured to the seat frame 20"'. More specifically, the first box 26"' is secured to the seat frame 20"' underneath the center console assembly. The electrically operated component 22"' is electrically connected to the first box 26"'. Specifically, each input wire 24"' extending from the electrically operated component 22"' is connected to a corresponding lead wire 28"' extending from the first box 26"'. As can be appreciated, any number or all of the electrically operated components 22"' discussed above could be connected to the first box 26"' and the first box 26"' could be secured to any part of the seat frame 20"'. An attachment member, generally depicted at 30"', is mounted on the seat frame 20"' for attaching the seat frame 20"' and the first box 26"' to a support structure. The support structure is comprised of a tunnel section 38"' and a vehicle floor pan 40"' of a vehicle (not shown). The attachment member 30''' comprises two outwardly extending brackets 32"' each having an L-shaped slot 34"'. Specifically , the brackets 32"' extend outwardly and downwardly from the seat frame 20"' whereby the L-shaped slot 34"' engages a locator pin 36"' protruding from the tunnel section 38"' of the vehicle floor pan 40"'. During installation of the seat assembly 10"', the seat frame 20''' may slide along the floor pan 40''' with a range equal to the size of the L-shaped slot 34'''.

The invention has been described in an illustrative manner, and it is to be understood that the terminology which has been used is intended to be in the nature of words of description rather than of limitation.

Obviously, many modifications and variations to the present invention are possible in light of the above teachings. It is therefore to be understood that within the scope of the appended Claims wherein reference numerals are merely for convenience and are not to be in any way limiting the invention may be practiced otherwise than as specifically described.

## Claims

1. A seat frame assembly (10) for a vehicle (12) and comprising;
a pair of fixed rails (16) extending fore and aft and being laterally spaced from one another,
a slide rail (24) supported by each of said fixed rails (16) for fore and aft movement relative to said fixed rails (16),
a pair of front and rear cross beams (28, 30) interconnecting said slide rails (24),
**characterised in that** said seat frame assembly (10) further includes:
a support sheet (40) extending between and supported by said cross beams (28, 30); and
a substantially rigid seat pan (42) disposed above said support sheet (40) for supporting the occupant of a first seat, wherein said seat pan (42) is adapted to support a cushioned occupant support member (64) thereon.

2. An assembly as set forth in claim 1 wherein said cross beams (28, 30) are hollow tubes.

3. An assembly as set forth in claim 1 or 2 including at least one seat back flange (32) for supporting a seat back (34), said rear cross beam (30) having an irregular cross section, said seat back flange (32) having an irregular opening (36) complementary to and surrounding said cross beam (30) for supporting a seat back (34) on said rear cross beam (30).

4. An assembly as set forth in claim 3 including a pair of seat back flanges (32) and a seat back (34) supported between said flanges (32).

5. An assembly as set forth in any preceding claim including a stylised seat bottom trim (62) supported on said pan (42).

6. An assembly as set forth in any preceding claim wherein said pan (42) includes a recess (43) and occupant support means (64) disposed in said recess (43) for cushioning support of an occupant.

7. An assembly as set forth in claim 6 wherein said occupant support means (64) comprises a flexible sheet suspended across said recess (43).

8. An assembly as set forth in claim 5 wherein at least one pair of said fixed (16) and slide rails (24) are disposed laterally of said bottom trim (62).

9. An assembly as set forth in any preceding claim further including a bladder (44, 46) disposed between said sheet (40) and said pan (42) for raising and lowering said pan (42) relative to said sheet (40).

10. An assembly as set forth in claim 9 including a rear bladder (44) and a front bladder (46) disposed between said sheet (40) and said pan (42) for raising and lowering the respective back and front of said pan (42) relative to said sheet (40).

11. An assembly as set forth in claim 9 or 10 further comprising a pump and electrical drive motor and associated controls to inflate and deflate said bladder (44,46).

12. An assembly as set forth in any preceding claim including front linkages (48) interconnecting said pan (42) and said slide rails (24) for guiding raising and lowering movement of the front of said pan (42) and rear linkages (48) interconnecting said pan (42) and said slide rails (24) for guiding raising and lowering movement of the rear of said pan (42).

13. An assembly as set forth in any preceding claim further including a single motor drive mechanism attached to said seat frame (10) for driving said slide rails (24) relative to said fixed rails (16) and for guiding said movement of said seat pan (42).

14. An assembly as set forth in any preceding claim including second pairs of fixed and slide rails (16, 24) and interconnecting cross beams (28, 30) defining a second seat, and including frame members (20) interconnecting the inside fixed rails (16) of said first and second seat assemblies for defining a front seat assembly which may be installed into a vehicle (12) as one unit.

15. An assembly as set forth in claim 14 including a centre console (70) supported on said frame members (20) between said first and second seat assemblies.

16. An assembly as set forth in any preceding claim including brackets (18) attached to said fixed rails (16) to attach the fixed rails (16) and seat frame assembly (10) to a vehicle (12) body.

17. An assembly as set forth in any preceding claim in which the said front and rear cross beams (28, 30) interconnecting said slide rails (24) support substantially all of the remaining components of said first seat supported substantially totally on said cross beams (28, 30).

18. An assembly as set forth in any preceding claim wherein said seat pan (42) is mounted for movement relative to said support sheet (40) for raising and lowering said seat pan (42) relative to said support sheet (40).

19. An assembly as set forth in any preceding claim wherein said support sheet (40) is substantially rigid.

## Patentansprüche

1. Sitzrahmenanordnung (10) für ein Fahrzeug (12), die folgendes aufweist:
- ein Paar von feststehenden Schienen (16), die sich nach vorn und hinten erstrecken und in Querrichtung voneinander beabstandet sind,
- eine Gleitschiene (24), die von jeder der feststehenden Schienen (16) für eine Vorwärts- und Rückwärtsbewegung relativ zu den feststehenden Schienen (16) abgestützt ist
- ein Paar von vorderen und hinteren Querträgern (28, 30), die die Gleitschienen (24) miteinander verbinden,
**dadurch gekennzeichnet,**
**daß** die Sitzrahmenanordnung (10) ferner folgendes aufweist:
einen Abstützflächenkörper (40), der sich zwischen den Querträgern (28, 30) erstreckt und davon abgestützt ist; und
eine im wesentlichen steife Sitzwanne (42), die über dem Abstützflächenkörper (40) angeordnet ist, um den Fahrgast auf einem ersten Sitz abzustützen, wobei die Sitzwanne (42) so ausgebildet ist, daß sie ein gepolstertes Fahrgastabstützelement (64) darauf abstützt.

2. Anordnung nach Anspruch 1,
wobei die Querträger (28, 30) hohle Rohre sind.

3. Anordnung nach Anspruch 1 oder 2,
die mindestens einen Rückenlehnenflansch (32) zum Abstützen einer Rückenlehne (34) aufweist, wobei der hintere Querträger (30) einen unregelmäßigen Querschnitt hat und wobei der Rückenlehnenflansch (32) eine unregelmäßige Öffnung (36) hat, die zu dem Querträger (30) komplementär ist und diesen umgibt, um eine Rückenlehne (34) an dem hinteren Querträger (30) abzustützen.

4. Anordnung nach Anspruch 3,
die ein Paar von Rückenlehnenflanschen (32) und eine Rückenlehne (34) aufweist, die zwischen den Flanschen (32) abgestützt ist.

5. Anordnung nach einem der vorhergehenden Ansprüche,
die eine stilisierte Sitzbodenverblendung (62) aufweist, die an der Wanne (42) abgestützt ist.

6. Anordnung nach einem der vorhergehenden Ansprüche,
wobei die Wanne (42) eine Ausnehmung (43) und eine Fahrgastabstützeinrichtung (64) aufweist, die in der Ausnehmung (43) zur gepolsterten Abstützung eines Fahrgastes angeordnet ist.

7. Anordnung nach Anspruch 6,
wobei die Fahrgastabstützeinrichtung (64) einen flexiblen Flächenkörper aufweist, der über der Ausnehmung (43) aufgehängt ist.

8. Anordnung nach Anspruch 5,
wobei mindestens ein Paar der feststehenden Schienen (16) und der Gleitschienen (24) in Querrichtung zu der Bodenverblendung (62) angeordnet ist.

9. Anordnung nach einem der vorhergehenden Ansprüche,
die ferner eine Blase (44, 46) aufweist, die zwischen dem Flächenkörper (40) und der Wanne (42) angeordnet ist, um die Wanne (42) relativ zu dem Flächenkörper (40) zu heben und zu senken.

10. Anordnung nach Anspruch 9,
die eine hintere Blase (44) und eine vordere Blase (46) aufweist, die zwischen dem Flächenkörper (40) und der Wanne (42) angeordnet sind, um die jeweilige Hinterseite und Vorderseite der Wanne (42) relativ zu dem Flächenkörper (40) zu heben und zu senken.

11. Anordnung nach Anspruch 9 oder 10,
die ferner eine Pumpe und einen elektrischen Antriebsmotor und zugeordnete Steuerungsmittel aufweist, um die Blase (44, 46) zu füllen und zu entleeren.

12. Anordnung nach einem der vorhergehenden Ansprüche,
die folgendes aufweist:
einen vorderen Hebelmechanismus (48), der die Wanne (42) und die Gleitschienen (24) miteinander verbindet, um die Hub- und Senkbewegung der Vorderseite der Wanne (42) zu führen, und einen hinteren Hebelmechanismus (50), der die Wanne (42) und die Gleitschienen (24) miteinander verbindet, um die Hub- und Senkbewegung der Hinterseite der Wanne (42) zu führen.

13. Anordnung nach einem der vorhergehenden Ansprüche,
die ferner eine einzige Motorantriebseinrichtung aufweist, die an dem Sitzrahmen angebracht ist, um die Gleitschienen (24) relativ zu den feststehenden Schienen (16) anzutreiben und um die Bewegung der Sitzwanne (42) zu führen.

14. Anordnung nach einem der vorhergehenden Ansprüche,
die zweite Paare von feststehenden Schienen und Gleitschienen (16, 24) und verbindenden Querträgern (28, 30) aufweist, die einen zweiten Sitz bilden, und die Rahmenelemente (20) aufweist, die die inneren feststehenden Schienen (16) der ersten und der zweiten Sitzanordnung miteinander verbinden, um eine Vordersitzanordnung zu bilden, die als eine Einheit in einem Fahrzeug (12) installierbar ist.

15. Anordnung nach Anspruch 14,
die eine Mittelkonsole (70) aufweist, die an den Rahmenelementen (20) zwischen der ersten und der zweiten Sitzanordnung abgestützt ist.

16. Anordnung nach einem der vorhergehenden Ansprüche,
die Halterungen (18) aufweist, die an den feststehenden Schienen (16) angebracht sind, um die feststehenden Schienen (16) und die Sitzrahmenanordnung (10) an dem Körper eines Fahrzeugs (12) zu befestigen.

17. Anordnung nach einem der vorhergehenden Ansprüche,
wobei der vordere und der hintere Querträger (28, 30), die die Gleitschienen (24) miteinander verbinden, im wesentlichen sämtliche verbleibenden Komponenten des ersten Sitzes abstützen, die im wesentlichen vollständig an den Querträgern (28, 30) abgestützt sind.

18. Anordnung nach einem der vorhergehenden Ansprüche,
wobei die Sitzwanne (42) für eine Bewegung relativ zu dem Abstützflächenkörper (40) zum Heben und Senken der Sitzwanne (42) relativ zu dem Abstützflächenkörper (40) angebracht ist.

19. Anordnung nach einem der vorhergehenden Ansprüche,
wobei der Abstützflächenkörper (40) im wesentlichen steif ist.

## Revendications

1. Ensemble de structure de siège (10) pour un véhicule (12), comprenant :
deux rails fixes (16) s'étendant dans la direction avant-arrière et latéralement espacés l'un de l'autre ;
un rail coulissant (24) supporté par chacun des dits rails fixes (16) pour un mouvement dans la direction avant-arrière, par rapport aux dits rails fixes (16); et
une traverse avant et une traverse arrière (28, 30) interconnectant les dits rails coulissants (24);
**caractérisé en ce que** le dit ensemble de structure de siège (10) comprend en outre :
une tôle de support (40) s'étendant entre les dites traverses (28, 30) et supportée par celles-ci ; et
une cuvette de siège sensiblement rigide (42) disposée au-dessus de la dite tôle de support (40) pour supporter l'occupant d'un premier siège, dans lequel la dite cuvette de siège (42) est prévue pour porter un élément souple de support d'occupant (64).

2. Ensemble selon la revendication 1, dans lequel les dites traverses (28, 30) sont des tubes creux.

3. Ensemble selon la revendication 1 ou 2, incluant au moins une oreille de montage de dossier (32) pour supporter un dossier (34), la dite traverse arrière (30) ayant une section transversale irrégulière, la dite oreille de dossier (32) comportant une ouverture irrégulière (36) complémentaire de la dite traverse (30) et entourant celle-ci pour supporter un dossier de siège (34) sur la dite traverse arrière (30).

4. Ensemble selon la revendication 3, incluant deux oreilles de montage de dossier (32) et un dossier (34) supporté entre les dites oreilles (32).

5. Ensemble selon une quelconque des revendications précédentes, incluant une garniture de siège stylisée (60) supportée sur la dite cuvette (42).

6. Ensemble selon une quelconque des revendications précédentes, dans lequel la dite cuvette (42) comporte un évidement (43) et un élément de support d'occupant (64) disposé dans le dit évidement (43) pour supporter un occupant de façon souple.

7. Ensemble selon la revendication 6, dans lequel le dit élément de support d'occupant (64) comprend une toile souple suspendue en travers du dit évidement (43).

8. Ensemble selon la revendication 5, dans lequel au moins une paire de dits rails fixe (16) et coulissant (24) est disposée latéralement par rapport à la dite garniture de siège (60).

9. Ensemble selon une quelconque des revendications précédentes, incluant en outre une vessie (44, 46) disposée entre la dite tôle de support (40) et la dite cuvette (42) pour relever et abaisser la dite cuvette (42) par rapport à la dite tôle (40).

10. Ensemble selon la revendication 9, incluant une vessie arrière (44) et une vessie avant (46) disposées entre la dite tôle de support (40) et la dite cuvette (42) pour relever et abaisser respectivement l'arrière et l'avant de la dite cuvette (42) par rapport à la dite tôle (40).

11. Ensemble selon la revendication 9 ou 10, comprenant en outre une pompe et un moteur d'entraînement électrique ainsi que des commandes associées pour gonfler et dégonfler la dite vessie (44, 46).

12. Ensemble selon une quelconque des revendications précédentes, incluant des dispositifs de liaison avant (48) qui interconnectent la dite cuvette (42) et les dits rails coulissants (24) pour guider le mouvement de montée et de descente de l'avant de la dite cuvette (42), et des dispositifs de liaison arrière (48) qui interconnectent la dite cuvette (42) et les dits rails coulissants (24) pour guider le mouvement de montée et de descente de l'arrière de la dite cuvette (42).

13. Ensemble selon une quelconque des revendications précédentes, incluant en outre un mécanisme d'entraînement à moteur unique attaché à la dite structure de siège (10) pour entraîner les dits rails coulissants (24) par rapport aux dits rails fixes (16) et pour guider le dit mouvement de la dite cuvette de siège (42).

14. Ensemble selon une quelconque des revendications précédentes, incluant des deuxièmes paires de rails fixes et coulissants. (16, 24) et des traverses d'interconnexion (28, 30) qui définissent un deuxième siège, et incluant des éléments de structure (20) qui interconnectent les rails fixes intérieurs (16) des dits premier et deuxième sièges pour définir un ensemble de sièges avant qui peut être installé sous la forme d'une unité dans un véhicule (12).

15. Ensemble selon la revendication 14, incluant une console centrale (70) supportée sur les dits éléments de structure (20) entre les dits premier et deuxième sièges.

16. Ensemble selon une quelconque des revendications précédentes, incluant des équerres 18) attachées aux dits rails fixes (16) afin d'attacher les rails fixes (16) et l'ensemble de structure de siège (10) à un châssis de véhicule (12).

17. Ensemble selon une quelconque des revendications précédentes, dans lequel les dites traverses avant et arrière (28, 30) interconnectant les dits rails coulissants (24) supportent sensiblement la totalité des composants restants du dit premier siège supporté sensiblement en totalité sur les dites traverses (28, 30).

18. Ensemble selon une quelconque des revendications précédentes, dans lequel la dite cuvette de siège (42) est montée pour un mouvement par rapport à la dite tôle de support (40), afin de relever et d'abaisser la dite cuvette de siège (42) par rapport à la dite tôle de support (40).

19. Ensemble selon une quelconque des revendications précédentes, dans lequel la dite tôle de support (40) est sensiblement rigide.
